# FASCICULE DE BREVET EUROPEEN

(11) **EP 0 844 106 B1**
(45) Date de publication et mention de la délivrance du brevet: **27.03.2002**
(21) Numéro de dépôt: 97119789.2
(22) Date de dépôt: 12.11.1997
(51) Int. Cl.: B60C 9/02, B29D 30/34, B60C 9/08

(54) **Renforcement de carcasse pour pneumatique, réalisé à partir d'un fil unique**
Karkassverstärkung für Reifen, die aus einem Einzeldraht hergestellt ist
Reinforcing carcass for tyre, made out of a single wire

(30) Priorité: 21.11.1996 FR 9614356
(43) Date de publication de la demande: 27.05.1998
(73) Titulaire: Compagnie Générale des Etablissements MICHELIN-MICHELIN & CIE, 63040 Clermont-Ferrand Cedex 09 (FR)
(72) Inventeur: Jara, Adam, 63040 Clermont-Ferrand Cedex (FR)
(74) Mandataire: Bauvir, Jacques

(56) Documents cités:
- EP-A- 0 009 018
- EP-A- 0 549 869
- EP-A- 0 583 615
- EP-A- 0 658 449
- US-A- 5 308 432

## Description

La présente invention concerne les pneumatiques. Plus particulièrement elle concerne la disposition des fils de renforcement dans les bourrelets et, plus généralement, elle concerne l'architecture de la carcasse.

Le renforcement de carcasse des pneumatiques est le plus souvent constitué par une ou plusieurs nappes, à l'heure actuelle en général radiales, retournées autour d'une ou de plusieurs tringles disposées dans les bourrelets. Les bourrelets constituent le moyen permettant de fixer le pneumatique sur la jante. Le fait que les renforcements de carcasse soient constitués par des nappes impose de réaliser celles-ci par calandrage, puis coupe à l'angle voulu (90° par rapport à la direction des fils pour une carcasse radiale) en morceaux de longueur voulue, puis assemblage des morceaux par soudure parallèle aux fils. Toutes ces opérations constituent des étapes de préparation distinctes de l'assemblage du pneumatique proprement dit. L'existence de ces étapes de préparation préalables complique la gestion des flux dans les ateliers de fabrication.

Aussi a-t-il déjà été proposé de réaliser la carcasse des pneumatiques à partir d'un seul fil. La difficulté dans ce cas réside dans la conception de carcasses qui soient suffisamment robustes pour remplir la fonction de structure de renforcement du pneumatique, et qui, par la trajectoire que forme le fil de carcasse, soient aussi aisées que possible à réaliser de façon mécanisée.

A titre d'illustration, on peut citer les propositions contenues dans les brevets US 4 277 295 et US 5 308 432. Cependant, la mécanisation des mouvements d'un organe de pose exécutant la première de ces propositions n'est pas simple. Par ailleurs, il est contre-indiqué d'avoir des noeuds ou des croisements de fils dans le bourrelet du pneumatique car la tension des fils dans cette zone est importante. Quant à la seconde proposition, elle présente l'inconvénient de la difficulté du transfert de la bobine d'une chaîne à l'autre de chaque côté du pneumatique. En outre, étant donné le volume nécessairement non nul occupé par les organes d'animation de la bobine, et étant donné le volume de celle-ci, il n'est pas possible, ni dans la première proposition ni dans la seconde, de poser les derniers arceaux du renforcement de carcasse en poursuivant le même mouvement de déplacement de ladite bobine. En effet, en fin de pose, le mécanisme bute sur les premiers arceaux posés bien avant d'avoir posé les derniers, et ceci d'autant plus tôt que la bobine est volumineuse.

Or un telle bobine est en pratique assez volumineuse. Il est donc difficile de lui faire subir de nombreuses accélérations en raison de son poids et de son inertie, et il est difficile de lui faire contourner la tringle car l'espace disponible est faible, principalement si l'on fabrique le pneumatique sur un noyau correspondant sensiblement à son futur volume intérieur, et ceci d'autant plus que la tringle est proche de sa position finale dans le pneumatique.

Le document EP-A-658 449 montre un renforcement de carcasse comprenant les caractéristiques du préambule de la revendication 1.

L'objectif de l'invention est de proposer un nouveau renforcement de carcasse composé de deux éléments symétriques liés au sommet, que l'on réalise chacun à partir d'un seul fil, lequel présente la résistance mécanique et l'endurance requise. La réalisation de chaque demi-renforcement peut être obtenue de façon simple, avec des types de fil différents ou des natures du matériau différents.

Le pneumatique radial selon l'invention comporte deux demi-renforcement de carcasse ancrés de chaque côté du pneumatique dans un bourrelet dont la base est destinée à être montée sur un siège de jante, chaque bourrelet comportant au moins une tringle, lesdits demi-renforcements de carcasse étant reliés par des moyens de liaison, chaque demi-renforcement de carcasse étant constitué à partir d'un fil de carcasse qui contourne ladite tringle et qui forme des tronçons adjacents s'étendant depuis ladite tringle au moins jusqu'auxdits moyens de liaison, lesdits tronçons de chaque demi-renforcement de carcasse étant disposés en une pluralité de groupes de deux tronçons adjacents reliés par une boucle au niveau desdits moyens de liaison, lesdits deux tronçons adjacents de chaque groupe passant axialement du même côté de la tringle, et alternativement axialement d'un côté puis de l'autre de la tringle en passant d'un groupe au groupe suivant.

Dans le présent mémoire, le terme « fil » désigne en toute généralité, aussi bien des mono-filaments que des multifilaments, ou des assemblages comme des câbles textiles ou métalliques, des retors ou bien encore n'importe quel type d'assemblage équivalent comme par exemple un câble hybride, et ceci, quelle que soient la ou les matières, le traitement éventuel de ces fils, par exemple traitement de surface ou enrobage, ou pré-encollage, pour favoriser l'adhésion sur le caoutchouc ou toute autre matière.

Par la présence de boucles au niveau de la bande de roulement, et par le contournement autour de la tringle, on voit que le renforcement de carcasse est du type « mono-fil ». Bien entendu, le renforcement de carcasse pourrait ne pas être fabriqué de façon continue à partir d'un seul fil. Il pourrait y avoir une discontinuité du fil, par exemple due à un changement de bobine. Selon la présente invention, il convient cependant de n'utiliser qu'un seul fil ou un faible nombre de fils par renforcement de carcasse et il convient de disposer les débuts et fins de fils sous la bande de roulement pour éviter toute discontinuité dans la zone basse du bourrelet (noeuds par exemple).

Notons que la liaison entre les deux demi-renforcements de carcasse symétriques ne pose pas de problème lorsqu'elle se situe sous la bande de roulement car on sait que, à cet endroit, les efforts de tension dans les fils constituant le renforcement sont pratiquement nuls. La fabrication par demi-renforcements de la carcasse permet d'aboutir à une simplification de l'appareillage industriel nécessaire et permet d'obtenir une grande robustesse du procédé sur le plan industriel.

Tous les détails de réalisation sont donnés dans la description qui suit, à consulter avec les figures suivantes :
Les figures 1 à 3 schématise le principe de fabrication d'une demi-carcasse selon l'invention ;
la figure 4 montre une jonction possible entre deux demi-carcasses.

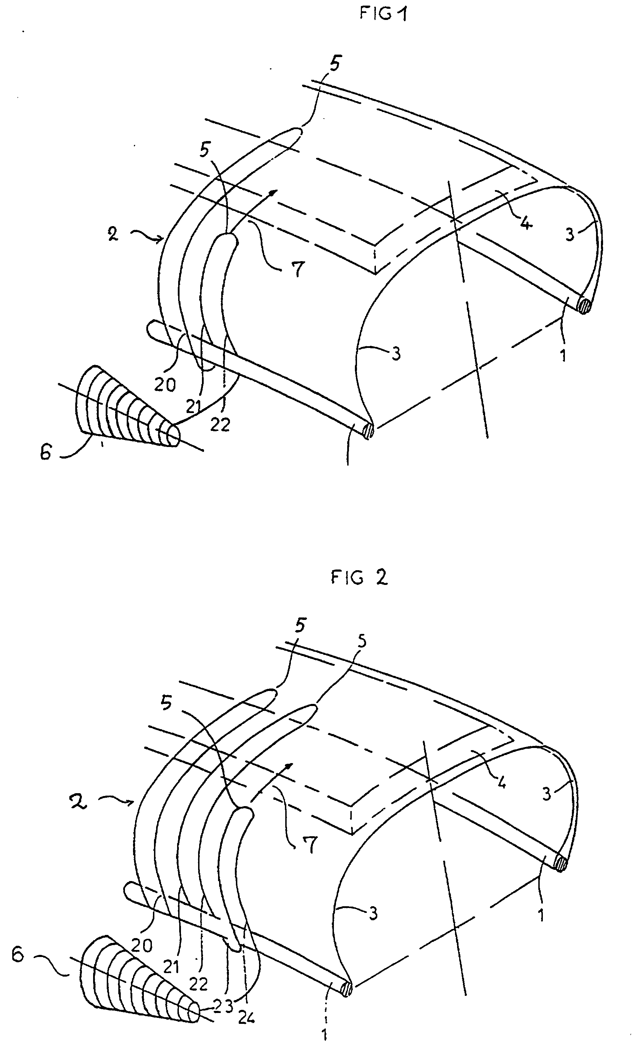

Aux figures 1 à 3, on a représenté de façon schématique et en perspective, un demi-renforcement de carcasse de pneumatique. On voit une tringle 1 ainsi qu'un fil de carcasse 2. La carcasse étant radiale, le fil 2 forme dans le flanc 3 des tronçons 20, 21, 22, 23, 24 adjacents. Dans cet exemple de réalisation, lesdits tronçons sont disposés sensiblement radialement.

Le cheminement du fil de carcasse 2 peut être observé en partant du tronçon désigné par la référence 20. Le fil passe du côté axialement extérieur de la tringle 1. Il contourne ladite tringle 1, passe du côté axialement intérieur de celle-ci, puis se dispose sous la forme d'un tronçon 21 adjacent au précédent. Le fil 2 fait demi-tour sous la bande de roulement 4. Une boucle 5 relie ainsi deux tronçons adjacents 21 et 22. Le tronçon 22 passe axialement du côté intérieur de la tringle 1. Il passe donc, et ceci est une caractéristique de l'invention, axialement du même côté que le tronçon 21. Le fil 2 contourne la tringle 1, puis remonte dans le flanc 3 du pneumatique. Il forme ainsi le tronçon 23. Puis, comme précédemment, il forme une boucle 5 sous la bande de roulement 4. Ensuite, le tronçon suivant, c'est à dire le tronçon 24, passe du même côté de la tringle 1 que le tronçon 23, donc à l'extérieur.

Chaque demi-renforcement de carcasse est constitué de proche en proche comme il vient d'être expliqué. Si l'on considère que les tronçons 21 et 22 forment un groupe, que les tronçons 23 et 24 forment le groupe suivant, qui est adjacent au précédent, alors le demi-renforcement de carcasse selon l'invention comporte une pluralité de groupes de deux tronçons adjacents, lesdits deux tronçons adjacents de chaque groupe passant axialement du même côté de la tringle, et alternativement axialement d'un côté puis de l'autre de la tringle en passant d'un groupe au groupe suivant.

Le principe d'une fabrication mécanisée est illustré en observant l'évolution entre les figures 1 à 3. On fabrique un demi-renforcement de carcasse par exemple sur un noyau rigide. Celui-ci peut être pré-revêtu d'une première couche, notamment de caoutchouc non vulcanisé si l'on fabrique un pneumatique en caoutchouc. On considère que la fabrication débute par le tronçon 20, dont on immobilise l'extrémité libre sous la future bande de roulement 4 du pneumatique. Au delà du tronçon 20, le fil rejoint un dispositif d'approvisionnement, par exemple une bobine 6 situé radialement plus bas que la tringle 1. On entraîne le fil par derrière la tringle, par exemple au moyen d'un crochet en formant une boucle 5, comme schématisé par la flèche 7. En faisant remonter ladite boucle 5 jusqu'au niveau de la bande de roulement 4, on assure la dépose des deux tronçons 21 et 22 (voir figure 1). Remarquons qu'il n'est pas nécessaire pour cela de faire passer une bobine par derrière la tringle 1. L'encombrement de celle-ci n'a donc aucune incidence sur cette phase du procédé de pose du fil 2.

Ensuite, en passant cette fois devant la tringle 1, le fil est entraîné en initiant la formation d'une boucle 5 comme précédemment (voir 7 à la figure 2) également par un crochet ou par tout autre mécanisme qui, dans ce cas peut agir au moins en partie simultanément. De la sorte, on réalise la pose des tronçons suivants 23 et 24, en entraînant le fil vers la bande de roulement. Ceci peut aussi se faire en transportant la bobine, sans que son encombrement pose de problème car on dispose de toute latitude de mouvement.

De proche en proche, on peut ainsi réaliser un demi-renforcement de carcasse sur toute la périphérie du noyau.

Sous la bande de roulement, on sait que les efforts de traction dans les fils constituant le renforcement d'une carcasse radiale sont faibles ou nuls. On dispose donc d'une grande latitude dans le choix des moyens de liaison. Si le pneumatique est réalisé avec un enrobage carcasse en caoutchouc, on utilise de préférence un noyau définissant la forme interne du pneumatique, au moins approximativement. Ce noyau est pré-revêtu de caoutchouc non vulcanisé. Il suffit donc de déposer les dites boucles sur le revêtement en caoutchouc au besoin en les pressant quelque peu pour assurer la stabilité de renforcement de carcasse pendant sa fabrication. Si la carcasse est confectionnée par injection ou coulée d'un matériau élastomérique à l'état liquide, par exemple du polyuréthanne, il est nécessaire d'assurer une fixation provisoire des deux demi-renforcements de carcasse avant de refermer le moule et de procéder à l'introduction de l'élastomère. Par la suite, et quelle que soit la nature de la matrice, l'imprégnation des fils dans la matrice assure la cohésion nécessaire.

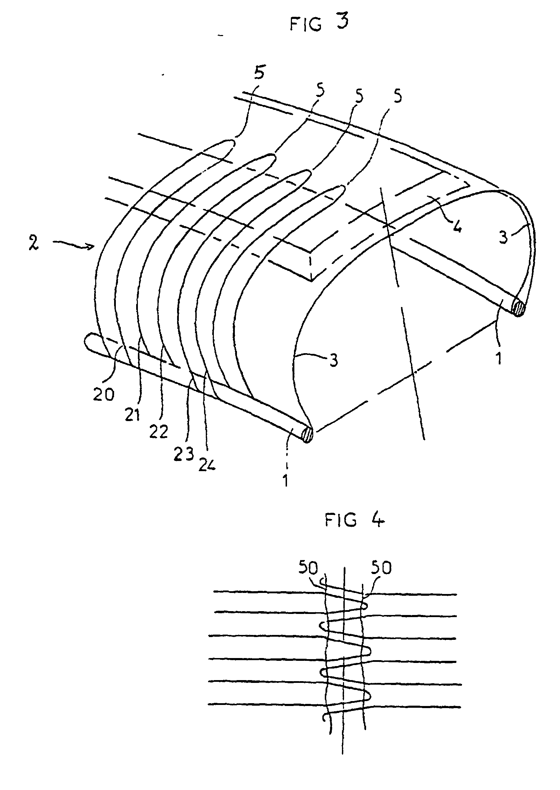

Les boucles peuvent être posées côte à côte. Pour assurer la liaison, on peut utiliser notamment un dispositif d'assemblage des demi-renforcements par couture avec un ou plusieurs fils de liaison 50, comme représenté à la figure 4, ou par laçage entre des boucles de chaque demi-renforcement de carcasse axialement écartées les unes des autres, et en passant alternativement d'une boucle à l'autre avec un ou deux lacets. A la figure 3, on voit que les tronçons aboutissant dans un même bourrelet ont tous sensiblement la même longueur, du fait que les boucles 5 sont alignées. On peut encore assurer une liaison par collage (par exemple par pulvérisation de colle permettant de solidariser au sommet les deux demi-renforcements, avec ou sans bandelette servant de support à la liaison).

Dans le pneumatique, le renforcement constituant ce que l'on appelle usuellement la ceinture assure aussi la liaison mécanique des deux portions de renforcement de carcasse.

## Revendications

1. Pneumatique radial comportant deux demi-renforcement de carcasse ancrés de chaque côté du pneumatique dans un bourrelet dont la base est destinée à être montée sur un siège de jante, chaque bourrelet comportant au moins une tringle (1), lesdits demi-renforcements de carcasse étant reliés par des moyens de liaison, chaque demi-renforcement de carcasse étant constitué à partir d'un fil de carcasse qui contourne ladite tringle et qui forme des tronçons adjacents (20, 21, 22, 23, 24) s'étendant depuis ladite tringle (1) au moins jusqu'auxdits moyens de liaison, lesdits tronçons de chaque demi-renforcements de carcasse étant disposés en une pluralité de groupes de deux tronçons adjacents reliés par une boucle (5) au niveau desdits moyens de liaison, **caractérisé en ce que** lesdits deux tronçons adjacents de chaque groupe passent axialement du même côté de la tringle, et alternativement axialement d'un côté puis de l'autre de la tringle en passant d'un groupe au groupe suivant.

2. Pneumatique selon la revendication 1, dans lequel les tronçons aboutissant dans un même bourrelet ont tous sensiblement la même longueur.

3. Pneumatique selon la revendication 1, dans lequel lesdits moyens de liaison sont disposés sous la bande de roulement dudit pneumatique.

4. Pneumatique selon la revendication 1, dans lequel lesdits tronçons sont disposés radialement dans le flanc.

## Patentansprüche

1. Radialreifen mit zwei Karkassen-Halbverstärkungen, die auf jeder Seite des Reifens in einem Wulst verankert sind, dessen Basis dazu bestimmt ist, auf einem Felgensitz montiert zu werden, wobei jeder Wulst mindestens einen Wulstkern (1) aufweist, die genannten Karkassen-Halbverstärkungen durch Verbindungsmittel verbunden sind, jede Karkassen-Halbverstärkung aus einem Karkassendraht gebildet ist, der um den genannten Wulstkern herumläuft und nebeneinanderliegende Stücke (20, 21, 22, 23, 24) bildet, die sich vom genannten Wulstkern (1) bis zu den genannten Verbindungsmitteln erstrecken, und die genannten Stücke jeder Karkassen-Halbverstärkung in einer Vielzahl von Gruppen aus zwei benachbarten Stücken angeordnet sind, die durch eine Schlaufe (5) auf Höhe der genannten Verbindungsmittel verbunden sind, **dadurch gekennzeichnet, daß** die genannten beiden, benachbarten Stücke einer jeden Gruppe axial auf derselben Seite des Wulstkerns vorbeilaufen, und zwar alternativ axial auf der einen Seite und dann auf der anderen des Wulstkerns, indem von der einen Gruppe auf die folgende übergegangen wird.

2. Reifen nach Anspruch 1, in dem die Stücke, die an ein und denselben Wulst anstoßen, im wesentlichen alle dieselbe Länge haben.

3. Reifen nach Anspruch 1, worin die genannten Verbindungsmittel unter der Lauffläche des genannten Reifens angeordnet sind.

4. Reifen nach Anspruch 1, worin die genannten Stücke radial in der Flanke angeordnet sind.

## Claims

1. A radial tyre comprising two carcass half-reinforcements anchored on each side of the tyre in a bead, the base of which is intended to be mounted on a rim seat, each bead comprising at least one bead wire (1), said carcass half-reinforcements being joined together by connecting means, each carcass half-reinforcement being formed from a carcass filament which is wrapped around said bead wire and forms adjacent strands (20, 21, 22, 23, 24) running from said bead wire (1) at least as far as said connecting means, said strands of each carcass half-reinforcement being arranged in a number of groups of two adjacent strands connected by a loop (5) at said connecting means, **characterised in that** said two adjacent strands of each group pass axially round the same side of the bead wire, and alternately axially round one side then round the other side of the bead wire, when passing from one group to the next group.

2. A tyre according to claim 1, wherein the strands which end in one and the same bead are all substantially the same length.

3. A tyre according to claim 1, wherein said connecting means are arranged under the tread of said tyre.

4. A tyre according to claim 1, wherein said strands are arranged radially in the sidewall.
